# EUROPEAN PATENT APPLICATION

(11) **EP 4 621 543 A1**
(43) Date of publication of application: **24.09.2025**
(21) Application number: 23896298.9
(22) Date of filing: 17.10.2023
(51) Int. Cl.: G06F 3/0488

(54) **APPLICATION INTERFACE DISPLAY METHOD AND APPARATUS, TERMINAL, STORAGE MEDIUM, AND PROGRAM PRODUCT**

(30) Priority: 30.11.2022 CN 202211528922
(71) Applicant: GUANGDONG OPPO MOBILE TELECOMMUNICATIONS CORP., LTD., Dongguan, Guangdong 523860 (CN)
(72) Inventor: FU, Qi, Dongguan, Guangdong 523860 (CN)
(74) Representative: Novagraaf Technologies
(86) International application number: PCT/CN2023/125068
(87) International publication number: WO 2024/114143

(57) **Abstract**

An application interface display method and apparatus, a terminal (110), a storage medium, and a program product, relating to the field of human-computer interaction. The application interface display method is applied to an electronic device. The electronic device comprises a first screen (111) and a second screen (112), and the first screen (111) and the second screen (112) support independent display; the application interface display method comprises: when a first gesture operation on a first application interface (307) in the first screen (111) is received, displaying a screen switching control (308) in the first screen (111), the screen switching control (308) being used for triggering the switching of the screen for displaying the application interface; after the screen switching control (308) is triggered, stopping displaying the first application interface (307) in the first screen (111), and displaying the first application interface (307) in the second screen (112).

## Description

The present application claims priority to Chinese Patent Application No. 202211528922.0, entitled "APPLICATION INTERFACE DISPLAY METHOD, APPLICATION INTERFACE DISPLAY DEVICE, TERMINAL, STORAGE MEDIUM, AND PROGRAM PRODUCT", filed on November 30, 2022, which is herein incorporated by reference in its entirety.

### TECHNICAL FIELD

The present disclosure relates to the field of human-computer interaction technologies, and in particular to an application interface display method, an application interface display device, a terminal, a storage medium, and a program product.

### BACKGROUND

With the continuous improvement of technology, intelligent terminals are gradually penetrating into people's daily lives, playing important roles in various aspects.

In daily life, the occasions where the intelligent terminals are needed are gradually increasing, such as mobile payments, scanning codes to ride public transport, intelligent access control, and scanning venue codes, etc. In these scenarios, users often need to display corresponding quick response (QR) code or barcode on their intelligent terminals, and the scanning results are fed back after the scanning devices scan.

However, when the users display the QR code interface, the operation of other applications may often be affected, so that it is not convenient for the users to use other applications normally while displaying the QR code interface.

### SUMMARY OF THE DISCLOSURE

The present disclosure provides an application interface display method, an application interface display device, a terminal, a storage medium, and a program product. The technical solutions are as follows.

In a first aspect, the embodiments of the present disclosure provide an application interface display method that is applied to an electronic device including a first screen and a second screen, and the first screen and the second screen support independent displaying. The application interface display method includes:
displaying a screen switching control on the first screen in a case where a first gesture operation performed on a first application interface on the first screen is received, wherein the screen switching control is configured to trigger switching of a screen that displays an application interface; and
stopping displaying the first application interface on the first screen and starting displaying the first application interface on the second screen, in a case where the screen switching control is triggered.

In a second aspect, the embodiments of the present disclosure provide an application interface display device that is applied to an electronic device including a first screen and a second screen, and the first screen and the second screen support independent displaying.

The application interface display device includes a display module.

The display module is configured for displaying a screen switching control on the first screen in a case where a first gesture operation performed on a first application interface on the first screen is received, and the screen switching control is configured to trigger switching of a screen that displays an application interface.

The display module is further configured for stopping displaying the first application interface on the first screen and starting displaying the first application interface on the second screen, in a case where the screen switching control is triggered.

In a third aspect, the embodiments of the present disclosure provide a terminal. The terminal includes a processor and a memory. The memory stores at least one program, and the at least one program is configured for being executed by the processor, so as to implement the application interface display method of any one of the above aspects.

In a fourth aspect, the embodiments of the present disclosure provide a computer-readable storage medium storing at least one program, and the at least one program is loaded and executed by a processor, so as to implement the application interface display method of any one of the above aspects.

In a fifth aspect, the embodiments of the present disclosure provide a computer program product including a computer instruction, and the computer instruction is stored in a computer-readable storage medium. A processor of a computer device reads the computer instruction from the computer-readable storage medium, and the processor executes the computer instruction, so that the computer device implements the application interface display method of any one of the above aspects.

### BRIEF DESCRIPTION OF THE DRAWINGS

In order to more clearly describe the technical solutions in some embodiments of the present disclosure, hereinafter, the accompanying drawings that are used in the description of some embodiments will be briefly described. Obviously, the accompanying drawings in the description below merely show some embodiments of the present disclosure. For those of ordinary skill in the art, other accompanying drawings may be obtained based on these accompanying drawings without any creative efforts.
FIG. 1 shows a schematic view of a terminal in some embodiments of the present disclosure.
FIG. 2 shows a flowchart of an application interface display method in some embodiments of the present disclosure.
FIG. 3 shows a schematic view illustrating a process of switching display application interface screens in some embodiments of the present disclosure.
FIG. 4 shows a schematic view illustrating a process of switching display application interface screens in some embodiments of the present disclosure.
FIG. 5 shows a schematic view illustrating a process of stopping displaying a first application interface on a second screen in some embodiments of the present disclosure.
FIG. 6 shows a schematic view of controlling a screen state of the second screen in some embodiments of the present disclosure.
FIG. 7 shows a schematic view illustrating a process of stopping displaying the first application interface on the second screen in some embodiments of the present disclosure.
FIG. 8 shows a schematic view illustrating a process of stopping displaying the first application interface on the second screen in some embodiments of the present disclosure.
FIG. 9 shows a schematic view illustrating a process of stopping displaying the first application interface on the second screen in some embodiments of the present disclosure.
FIG. 10 shows a schematic view of switching display content of the second screen in some embodiments of the present disclosure.
FIG. 11 shows a schematic view of switching the display content of the second screen in some embodiments of the present disclosure.
FIG. 12 shows a schematic view of an inoperable reminder in some embodiments of the present disclosure.
FIG. 13 shows a schematic view of an inoperable reminder in some embodiments of the present disclosure.
FIG. 14 shows a schematic view of switching the second screen to display an application interface through an interactive control in some embodiments of the present disclosure.
FIG. 15 shows a schematic view illustrating dynamic display of a screen interactive control in some embodiments of the present disclosure.
FIG. 16 shows a structural block view of an application interface display device in some embodiments of the present disclosure.
FIG. 17 shows a structural block view of a terminal in some embodiments of the present disclosure.

### DETAILED DESCRIPTION

In order to make purposes, technical solutions, and advantages of the present disclosure clearer, embodiments of the present disclosure may be further explained in detail in conjunction with the accompanying drawings.

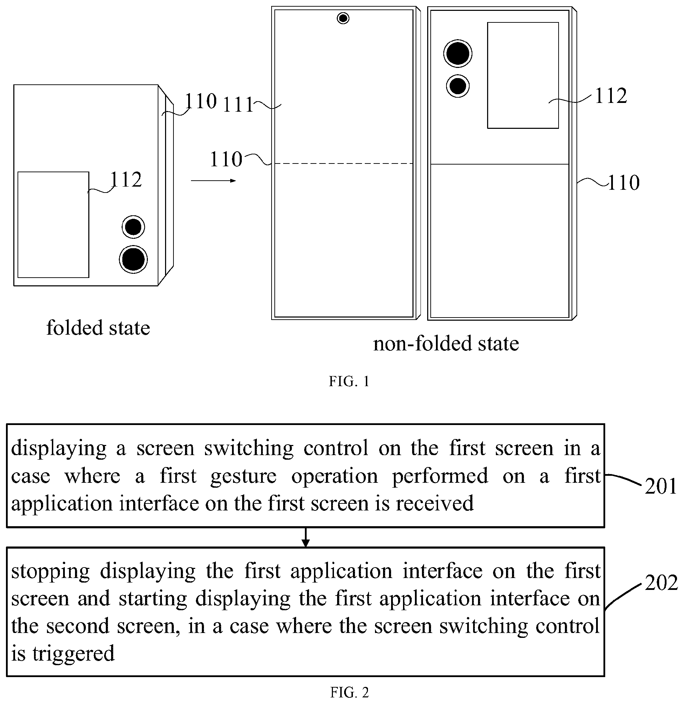

As illustrated in FIG. 1, FIG. 1 shows a schematic view of a terminal in some embodiments of the present disclosure. In some embodiments of the present disclosure, a terminal 110 includes a first screen and a second screen. The terminal may be a non-foldable intelligent terminal with two screens, a foldable screen terminal with an inner screen and an outer screen, or an outward-foldable screen terminal.

In a case where the terminal is the non-foldable intelligent terminal with two screens, the two screens included in the terminal are disposed on two sides of the terminal, and the first screen and the second screen support independent displaying. The first screen is a main operation screen, and a user may control the terminal by operating the first screen. The second screen has an interface display function and only supports partial operations. The second screen is disposed next to a rear camera. Therefore, the second screen has a smaller screen size. A screen size of the first screen is greater than that of the second screen. Both screens of the terminal remain exposed.

In a case where the terminal is the outward-foldable screen terminal, the first screen and the second screen may be two screens or two display areas of one screen, and these two display areas support independent displaying. In the case where the terminal is the outward-foldable screen terminal, a size of the first screen and a size of the second screen are usually similar, and the first screen and the second screen remain exposed.

The terminal is in a non-folded state, the first screen and the second screen are located on the same side of the terminal. The first screen and the second screen serve as a display area and do not have independent displaying functions.

The terminal is in a folded state, a main screen of the first screen and the second screen faces the user, and the other screen is located on an opposite side of the main screen, not facing the user for display. The two screens support independent displaying. In the user's usage process, the main screen is usually in an active state or in a screen-on state, and a secondary screen is in an inactive state or in a screen-off state. The secondary screen only supports partial operations.

The present embodiment may be applied to the outward-foldable screen in the folded state, the first screen is assumed to be the main screen, and the second screen is assumed to be the secondary screen. In a case where the user has the need to display the application interface through the second screen in the folded state, the display interface and display effect of the second screen may be controlled by operating the first screen facing the user.

In a case where the terminal is the foldable screen terminal with the inner screen and the outer screen, as illustrated in FIG. 1, the foldable screen terminal includes a second screen 112 and a first screen 111 that supports vertical foldable. The first screen 111 and the second screen 112 are located on different sides of the terminal 110, and the size of the first screen 111 is greater than that of the second screen 112.

In some embodiments of the present disclosure, in a case where the foldable screen is in the folded state, the first screen 111 is not exposed, while the second screen 112 is exposed. In a case where the foldable screen terminal is in the non-folded state, both the first screen 111 and the second screen 112 are exposed. In some embodiments of the present disclosure, the first screen 111 is the user's main operation screen, and the second screen 112 is only configured for real-time display of the application interface. The controls in the application interface displayed in the second screen 112 cannot be triggered by the user.

In some embodiments of the present disclosure, the user may switch the terminal between the unfolded state and the folded state according to their own usage needs. In some embodiments, in a case where the user does not have any terminal usage needs, the terminal may be in the folded state, making it easier to carry. In some embodiments, in a case where the user has the need to use more complex functions, the terminal may be in the non-folded state.

The following embodiments are all carried out in a case where the terminal 110 is a vertically folded terminal, but this do not limit the application scope of the embodiments of the present disclosure.

As illustrated in FIG. 2, FIG. 2 shows a flowchart of an application interface display method in some embodiments of the present disclosure. In some embodiments of the present disclosure, the method applied to the foldable screen terminal illustrated in FIG. 1 is taken as an example for explanation. The method includes the following operations.

At block 201, the method may include displaying a screen switching control on the first screen in a case where a first gesture operation performed on a first application interface on the first screen is received.

The screen switching control is configured to trigger switching of the screen that displays the application interface.

In a case where the user needs to display the first application interface that is displayed on the first screen on the second screen, the first gesture operation may be performed on the first application interface on the first screen. In a case where the first gesture operation performed on the first application interface on the first screen is received by the terminal, the screen switching control is displayed on the first screen.

On one hand, the screen switching control is configured to switch the screen displaying the first application interface after triggering. That is, the first application interface displayed on the first screen is displayed on the second screen. On the other hand, the terminal displays the screen switching control on the first screen, which may guide the user's next operation.

In order to enable the user to intuitively understand a position of the second screen, developers usually preset the screen switching control in an area on the first screen that corresponds to the position of the second screen. After receiving the user's first gesture operation, the terminal displays the screen switching control at the preset position on the first screen, facilitating the user's next operation.

In some embodiments, the terminal may display an identifier for the second screen on the screen switching control. The identifier for the second screen may indicate the form of the second screen and/or the position of the second screen in the terminal.

In some embodiments, a display state of the screen switching control, such as a size, a color, or the like, may be consistent with a current theme state of the terminal.

In some embodiments, the manner of the first gesture operation may be sliding, dragging, tapping, knuckle-tapping, etc. In some embodiments, a first triggering method is sliding, and a sliding direction may be arbitrary. The first gesture operation that enables the terminal to display the screen switching control is a preset gesture preset by the developers during the development process. The terminal may trigger the display of the screen switching control in a case where the terminal receives a user gesture operation that is consistent with the preset gesture.

At block 202, the method may include stopping displaying the first application interface on the first screen and starting displaying the first application interface on the second screen, in a case where the screen switching control is triggered.

The screen switching control may be triggered in various ways, such as user tapping or sliding, etc. The method to trigger the screen switching control is also preset by the developers during the development process. In a case where the triggering operation received by the terminal is consistent with the preset method preset by the developers, the screen switching control may be triggered.

The function of the screen switching control is to trigger the switching of the screen displaying the application interface. Therefore, after the screen switching control is triggered, the terminal may stop displaying the first application interface on the first screen and display the first application interface on the second screen.

The second screen only serves as a real-time display for the first application interface. After the first application interface is displayed on the second screen, the controls in the first application interface cannot be triggered by the user on the second screen anymore.

Displaying the first application interface on the second screen may allow to the application interface to be displayed externally without affecting the normal use of the first screen. In some embodiments, in a case where the user is about to take public vehicle and needs to show a riding code, but also has the need to use other applications while waiting for the vehicle, the user may perform the first gesture operation while the riding code is displayed on the first screen. After receiving the first gesture operation, the terminal displays the screen switching control. After the screen switching control is triggered, the terminal stops displaying a riding code page on the first screen and displays the riding code page on the second screen. In this way, the user may show the riding code on the second screen for boarding purposes while still being able to use other applications on the first screen.

In some embodiments, the terminal displays the complete first application interface on the second screen. The complete first application interface on the second screen is identical to the first application interface displayed on the first screen. The difference is that the first application interface displayed on the second screen is smaller in size and the controls in the first application interface cannot be triggered.

In some embodiments, due to the smaller size of the second screen, the terminal may display important interface elements of the first application interface during displaying the first application interface on the second screen. It prioritizes the display effect of the important interface elements, and non-important interface elements of the first application interface may be hidden.

In some embodiments, the important interface elements may be determined based on the interface type of the first application interface. In some embodiments, in a case where the interface type is a graphical code display interface, the important interface element is the graphical code in the interface. In a case where the interface type is a travel display interface, the important interface element is the map element in the interface. The embodiments of the present disclosure do not limit the specific types of the important interface elements and the determination methods of the important interface elements.

In some embodiments, in a case where it is necessary to display the riding code page on the second screen, the terminal may display the riding code area of the riding code page on the second screen, and the rest of the area are not be displayed. This may highlight the main content of the first application interface on the second screen. This main content refers to the part of the first application interface that needs to be displayed externally according to the user's needs. Due to the smaller size of the second screen, displaying only the main content may make the image clearer, which is beneficial for a recognition component to recognize the displayed image on the second screen.

In summary, in some embodiments of the present disclosure, the terminal has two display screens. After receiving the first gesture operation performed on the first screen, the terminal may display the screen switching control on the first screen. In a case where the control is triggered, the terminal may stop displaying the first application interface that is displayed on the first screen and display the first application interface on the second screen. This allows the second screen to display the content of the first application, so that the user may display the first application interface on the second screen without affecting the normal display of the first screen. In a case where the user needs to display externally the first application interface that is displayed on the first screen, the first application interface may be directly displayed on the second screen. In some embodiments, in a case where the user needs to take public vehicle, the riding code may be displayed on the second screen. During the scanning process, the riding code may be displayed directly on the second screen, without causing inconvenience to the user using the first screen.

In some embodiments, the displaying a screen switching control on the first screen in a case where a first gesture operation performed on a first application interface on the first screen is received, includes:
displaying the screen switching control in a target area of the first screen in a case where a dragging operation performed on the first application interface on the first screen is received and a dragging direction of the dragging operation is a target direction, wherein the target area is an area pointed to by the dragging direction.

In some embodiments, the first application interface shrinks during a dragging operation process, and shrunk first application interface moves with the dragging operation.

The stopping displaying the first application interface on the first screen and starting displaying the first application interface on the second screen, in a case where the screen switching control is triggered, includes:
determining that the screen switching control is triggered, stopping displaying the first application interface on the first screen, and starting displaying the first application interface on the second screen, in a case where the dragging operation is completed and there is an intersection between the first application interface and the screen switching control.

In some embodiments, the first application interface shrinks during a dragging operation process, and shrunk first application interface is fixedly displayed.

The stopping displaying the first application interface on the first screen and starting displaying the first application interface on the second screen, in a case where the screen switching control is triggered, includes:
stopping displaying the first application interface on the first screen and starting displaying the first application interface on the second screen in a case where a triggering operation performed on the screen switching control is received.

In some embodiments, after stopping displaying the first application interface on the first screen, the application interface display method further includes:
displaying an interactive control on the first screen;
stopping displaying the first application interface on the second screen and starting displaying the first application interface on the first screen in a case where a first triggering operation performed on the interactive control is received; and
stopping displaying the interactive control.

In some embodiments, the displaying an interactive control on the first screen, includes:
displaying the interactive control on the first screen based on a screen state of the second screen; wherein the display state of the interactive control is a first state in a case where the second screen is in a screen-on state, and the display state of the interactive control is a second state in a case where the second screen is in a screen-off state.

In some embodiments, the application interface display method further includes:
switching the display state of the interactive control to the first state in response to a second triggering operation performed on the interactive control, in a case where the display state of the interactive control is the second state; and
switching the second screen to be in the screen-on state.

In some embodiments, after displaying the interactive control on the first screen, the application interface display method further includes:
stopping displaying the first application interface on the second screen and stopping displaying the interactive control on the first screen, in a case where a second gesture operation performed on the first application interface on the second screen is received.

In some embodiments, displaying the first application interface on the second screen in a case where the screen switching control is triggered, includes:
switching the second application interface displayed on the second screen to the first application interface in a case where the screen switching control is triggered and the second application interface is displayed on the second screen.

The application interface display method further includes:
switching the first application interface to the second application interface in a case where a third gesture operation performed on the first application interface on the second screen is received.

In some embodiments, the first screen is an inward-foldable screen, and the second screen is an outer screen of the electronic device. In a case where the first screen is in a folded state, the first screen is not exposed, and the second screen is exposed.

The switching the first application interface to the second application interface in a case where a third gesture operation performed on the first application interface on the second screen is received, includes:
switching the first application interface to the second application interface in a case where the third gesture operation performed on the first application interface on the second screen is received and the first screen is in the folded state.

The application interface display method further includes:
maintaining display of the first application interface on the second screen in a case where the third gesture operation performed on the first application interface on the second screen is received and the first screen is in a non-folded state.

In some embodiments, an interactive control is displayed on the first screen in the case where the application interface is displayed on the second screen.

After switching the second application interface displayed on the second screen to the first application interface, the application interface display method further includes:
switching the first application interface to the second application interface in a case where the third triggering operation performed on the interactive control is received.

In some embodiments, the display state of the interactive control is related to a primary color tone of an application corresponding to currently displayed application interface on the second screen.

In some embodiments, after stopping displaying the first application interface on the first screen and starting displaying the first application interface on the second screen, in a case where the screen switching control is triggered, the application interface display method further includes:
stopping displaying the first application interface on the second screen and starting displaying the first application interface on the first screen, in a case where an application opening operation is received and the application opening operation is configured for indicating opening of an application corresponding to the first application interface.

After receiving the first gesture operation performed on the first application interface on the first screen, the terminal may display the screen switching control on the first screen. The first gesture operation and the position of the first control should be consistent with the preset method preset by the developers during the development process.

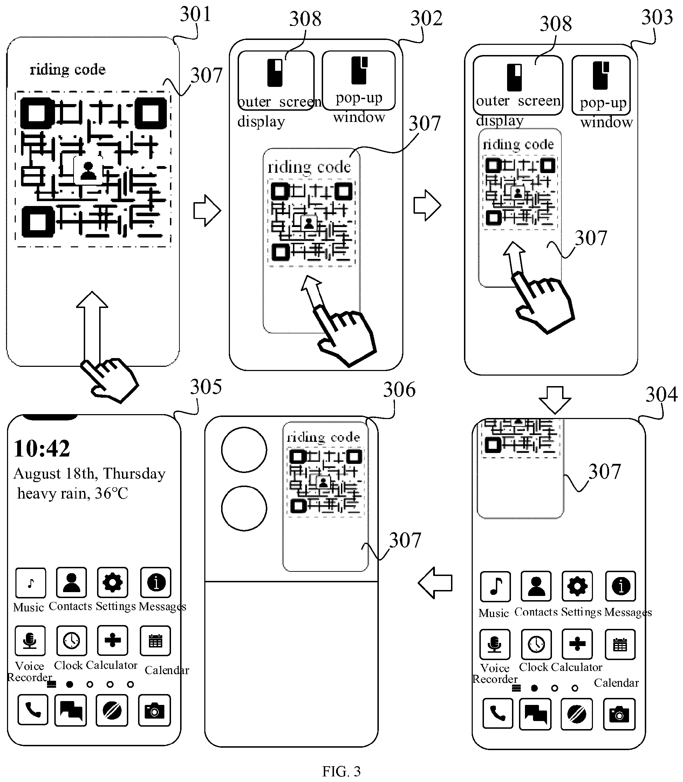

In some embodiments, the first gesture operation is the dragging operation, and the target direction is a direction toward a corner of the first screen, such as, toward a top-left corner of the first screen. In a case where the terminal receives the dragging operation performed on the first application interface on the first screen and the dragging direction of the dragging operation is the target direction, the screen switching control is displayed in the target area of the first screen, and the target area is the area pointed to by the dragging direction. FIG. 3 shows a schematic view illustrating the process of switching the screen that displays the application interface. In FIG. 3, the first gesture operation performed on the first display interface 301 of the first screen is the dragging operation upward from the bottom of the screen, and the target direction is upward. The area pointed to by the target area is above the first screen. After receiving the dragging operation performed on the first application interface 307 on the first screen, the screen switching control is displayed at the top of the first screen, such as the second display interface 302 with the screen switching control 308, as illustrated in FIG. 3. In some embodiments, after receiving the first gesture operation on the terminal, the user may also want to display the current first application interface in the form of a floating window. Therefore, a pop-up control may also be displayed at the top of the second display interface 302, as illustrated in FIG. 3.

In some embodiments, after the terminal receives the dragging operation, the first application interface displayed on the first screen may shrink during the dragging operation. After shrinking to a certain size, the first application interface may stop shrinking, and the shrunk first application interface may move with the dragging operation. As illustrated in FIG. 3, during the dragging operation, the first application interface 307 in the first display interface 301 may shrink proportionally and become the shrunk first application interface 307 in the second display interface 302. Moreover, the shrunk first application interface 307 may move with the dragging operation.

The first application interface moves with the dragging operation. In a case where after the dragging operation is completed and there is an intersection between the first application interface and the screen switching control, the terminal may determine that the screen switching control is triggered and stop displaying the first application interface on the first screen, as well as display the first application interface on the second screen. As illustrated in FIG. 3, in the third display interface 303, in a case where the first application interface 307 moves with the dragging operation to intersect with the screen switching control 308, the terminal stops displaying the first application interface 307 on the first screen, as illustrated in the fifth display interface 305 and the first application interface 307 that is displayed on the second screen 306 of FIG. 3.

In some embodiments, in order to enable the user to intuitively understand the position of the second screen by viewing the first screen, after the user's gesture operation is completed, as illustrated in the fourth display interface 304 of FIG. 3, the terminal may display the dynamic effect of the first application interface 307 gradually moving out of the first screen, and the position where the first application interface 307 moves out corresponds to the position of the second screen.

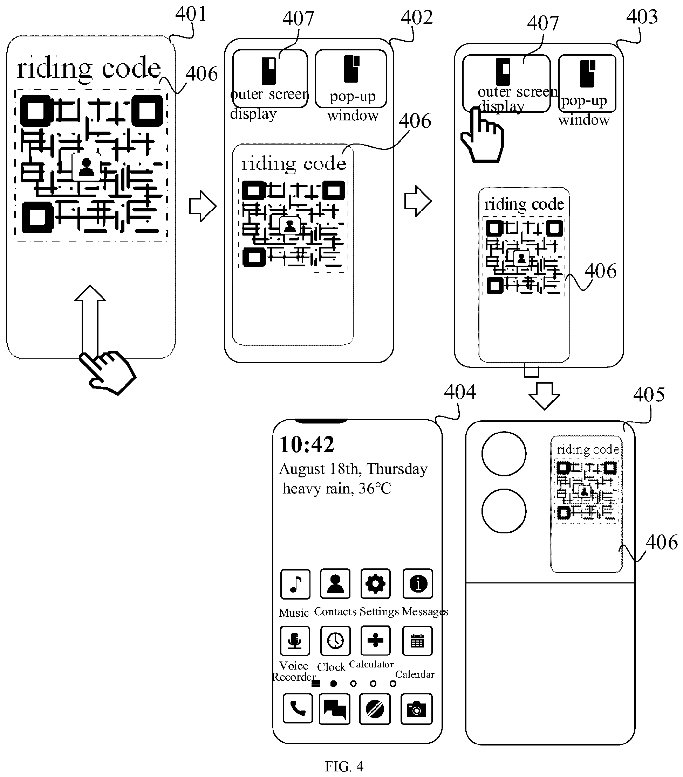

In some embodiments, after the terminal receives the dragging operation, the first application interface displayed on the first screen may shrink during the dragging operation, and the shrunk first application interface may be fixedly displayed. As illustrated in FIG. 4, the first application interface 406 in the first display interface 401 may shrink during the dragging operation. After shrinking to a certain extent, the shrunk first application interface 406 may be fixedly displayed. In the second display interface 402, the first application interface 406 may be fixedly displayed. In this case, the terminal may also display the screen switching control 407 on the first screen. The screen switching control 407 in the third display interface 403 of FIG. 4 is triggered by the user's tapping operation. In a case where the terminal receives the triggering operation of the screen switching control, the terminal stops displaying the first application interface on the first screen, as illustrated in the fourth display interface 404 and the first application interface 406 that is displayed on the second screen 405 of FIG. 4.

After the terminal stops displaying the first application interface on the first screen, an interactive control may be displayed on the first screen. The interactive control may display the display state of the second screen. The user may control the second screen by triggering the interactive control. Therefore, the user may control the display state of the second screen through the first screen. The position of the interactive control corresponds to the position of the second screen.

The following two methods are used as illustrative examples to illustrate the control of the display state of the second screen through controlling the first screen. The two methods are as follows.

A first method: in a case where the first triggering operation performed on the interactive control is received, the terminal stops displaying the first application interface on the second screen and displays the first application interface on the first screen.

After the first application interface is redisplayed on the first screen, since other application interfaces are not displayed on the second screen in this case, the terminal stops displaying the interactive control on the first screen.

Therefore, the user may cancel the display of the first application interface on the second screen through performing the first triggering operation on the first screen. The first triggering operation is preset by the developers during the development process. In a case where the terminal receives the first triggering operation that is the same as the preset operation, the interactive control is triggered. The specific triggering method is not limited in the embodiments of the present disclosure.

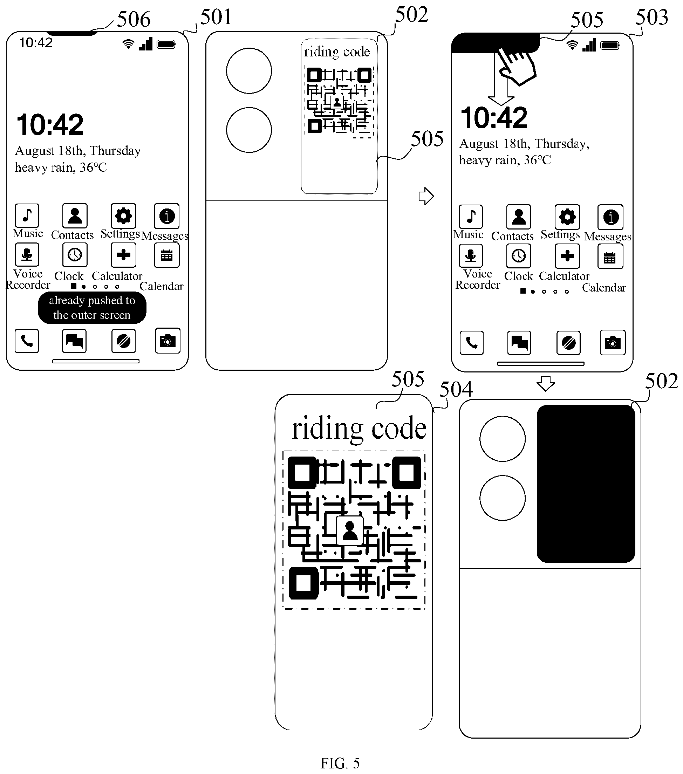

In some embodiments, the first triggering operation is a pull-down operation. As illustrated in FIG. 5, the first display interface 501 is the display interface that the first application interface 505 has been stopped from being displayed on the first screen, and the interactive control 506 is displayed. In this case, the first application interface 505 is displayed on the second screen 502. In the third display interface 503, in a case where the terminal receives the pull-down operation (i.e. the first triggering operation), the pull-down operation starts from the display area of the interactive control 506. In order to enable the user to more intuitively understand the display position of the second screen, the terminal may gradually display the first application interface 505 according to the pull-down operation, so that the first application interface 505 is dynamically displayed in the first user interface following the pull-down gesture. In the fourth display interface 504, the terminal redisplays the first user interface 505 on the first screen, and synchronously stops displaying the first application interface 505 on the second screen 502.

A second method: displaying the screen state of the second screen through the interactive control on the first screen, and switching the second screen to be in the screen-on state in a case where the interactive control on the first screen is triggered.

After completing the display of the first application interface on the second screen, the terminal may display the interactive control on the first screen based on the screen state of the second screen. In a case where the second screen is in the screen-on state, the display state of the interactive controls may be a first state. In a case where the second screen is in the screen-off state, the display state of the interactive control may be a second state.

Under normal circumstances, after the terminal displays the first application interface on the second screen, the second screen should be in the screen-on state, and the display state of the interactive control should be the first state corresponding to the screen-on state. For the purpose of reducing screen power consumption, the terminal may have a preset screen-off time. The screen state of the second screen is controlled based on the user's operation during the preset time. In a case where the terminal does not receive any operation from the user on the second screen or interactive control in the first preset time, the terminal may reduce the screen brightness and reduce power consumption. In a case where the terminal still does not receive any operation from the user on the second screen or interactive control in the second preset time, the second screen may be turned off, and the second screen may be in the screen-off state. In this case, the display state of the interactive control on the first screen is the second state corresponding to the screen-off state, and the first preset time is less than the second preset time.

In a case where the terminal does not receive any operation on at least one of the second screen or the interactive control for a period of time, the second screen remains in the screen-off state, and the display state of the interactive control is the second state. In this case, in response to the second triggering operation performed on the interactive control, the terminal switches the display state of the interactive control to the first state, and controls the second screen to switch to be in the screen-on state.

The second triggering operation may be the tapping operation, the sliding operation, etc., which is not limited in the embodiments of the present disclosure.

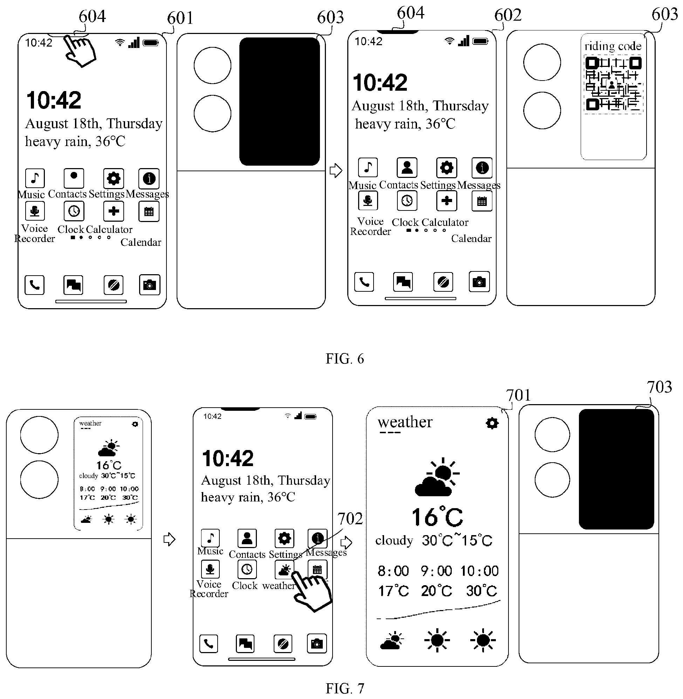

There may be differences between the first state and the second state in multiple aspects, which is also related to the preset attribute of the interactive control set by the developers. The first state may differ from the second state in at least one aspect of color, shape, text content, and brightness. As illustrated in FIG. 6, which shows a schematic view of switching the second screen state. The second triggering operation is the tapping operation, and the difference between the first state and the second state lies in the color of the control, and black represents the first state and white represents the second state. In a case where the interactive control 604 in the first display interface 601 of FIG. 6 is in the second state (white state), the corresponding second screen 603 is in the screen-off state. In a case where the terminal receives the user's second triggering operation (tapping operation) on the interactive control, the interactive control 604 in the second display interface 602 is switched to be in the first state, and the corresponding second screen 603 also be switched to be in the screen-on state.

In some embodiments, after receiving the user's triggering operation on the second screen, the terminal may also switch the second screen to be in the screen-on state. This triggering operation may be the tapping operation, the pull-down operation, a long-press operation, etc. The display state of the interactive control changes synchronously with the screen state of the second screen, which may not be repeated in the embodiments of the present disclosure.

**In** some embodiments, the intelligent terminal only supports displaying the application interface in one way, for example, the full-screen application interface and the application floating window of the same application cannot be displayed simultaneously. Since the control in the application interface displayed on the second screen in some embodiments cannot be triggered, the first application interface displayed on the second screen may be regarded as a kind of mini floating window, which serves to display the application interface in real time. The application interface of the same application cannot be displayed on both the first screen and the second screen simultaneously.

After the terminal displays the first application interface on the second screen and receives an application opening operation, which is configured for indicating the opening of the application corresponding to the first application interface, the terminal stops displaying the first application interface on the second screen and displays the first application interface on the first screen.

The application opening operation may be the user's tapping operation on the main interface icon of the application corresponding to the first application interface, directly opening the full-screen first application interface; or the user's tapping operation on the application icon in the sidebar; or the user's opening operation on the floating window of the first application corresponding to the first application interface, etc. The terminal may receive the user's tapping operation on the floating window display control in the task interface to open the floating window. The specific method of opening the application is not limited in the embodiments of the present disclosure.

As illustrated in FIG. 7, after the terminal displays the first application interface 701 on the second screen, the terminal receives the application opening operation (tapping operation on the main interface icon 702) that is configured for indicating the opening of the application corresponding to the first application interface. Then, the terminal displays the first application interface 701 on the first screen and stops displaying the first application interface on the second screen 703.

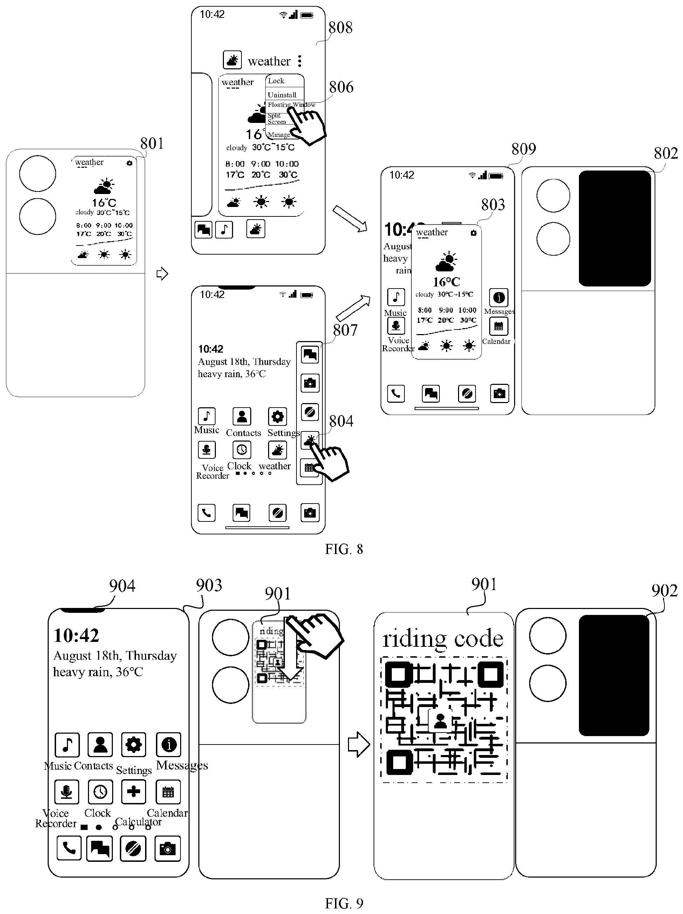

As illustrated in FIG. 8, after the terminal displays the first application interface 801 on the second screen, the terminal receives the application opening operation that is configured for indicating the opening of the application corresponding to the first application interface, such as the first display interface 809. The terminal displays the first application interface floating window 803 on the first screen and stops displaying the first application interface 801 on the second screen 802. The application opening operation for the first application interface floating window 803 may be the tapping operation on the application icon 804 of the application corresponding to the first application interface in the sidebar 807, or the tapping operation on the floating window display control 806 in the task interface 808.

In addition to the received triggering operation on the first screen being able to stop displaying the first application interface on the second screen, the terminal may also stop displaying the first application interface on the second screen in a case where the terminal receives a specific operation on the second screen. In a case where the terminal receives the second gesture operation performed on the first application interface on the second screen, the terminal stops displaying the first application interface on the second screen and stops displaying the interactive control on the first screen.

The second gesture operation may be sliding, dragging, tapping, knuckle-tapping, etc., which should match the gesture operation preset by the developers during the development process.

As illustrated in FIG. 9, after the first application interface is displayed on the second screen, that is, after the interactive control 904 is displayed on the first screen 903, in a case where the terminal receives the user's the downward sliding operation performed on the first application interface 901 on the second screen starting from the top, the terminal stops displaying the first application interface 901 on the second screen 902 and stops displaying the interactive control 904 on the first screen.

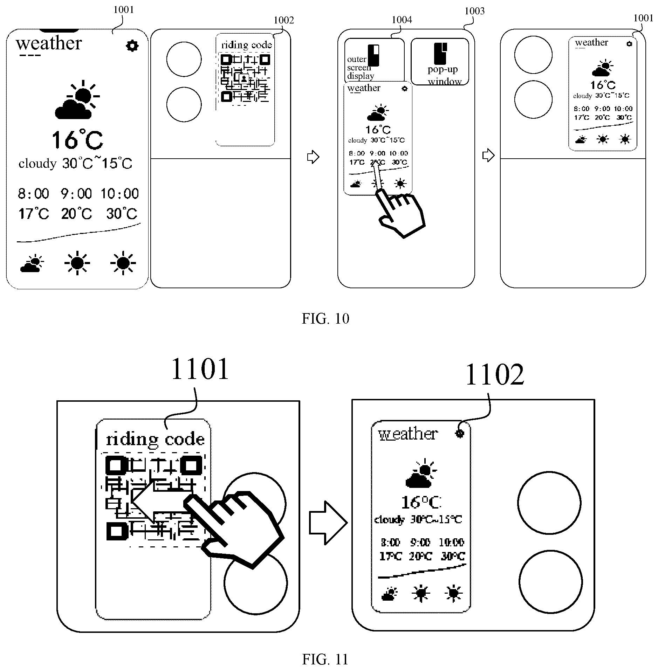

In a case where the user has the need to display the first application interface on the second screen, the user may switch the screen displaying the first application interface through triggering the screen switching control. Even if the second application interface is already displayed on the second screen, the terminal may display the first application interface on the second screen, covering the previously displayed interface. In a case where the screen switching control is triggered and the second application interface is displayed on the second screen, the terminal may switch the second application interface displayed on the second screen to the first application interface. As illustrated in FIG. 10, in a case where the first application interface 1001 is displayed on the first screen, the second screen displays the second application interface 1002. In the first display interface 1003, the terminal responds to the first gesture operation to display the screen switching control 1004, and the screen switching control 1004 is triggered. After the screen switching control 1004 is triggered, the terminal switches the second application interface 1002 displayed on the second screen to the first application interface 1001.

**In** some embodiments, in the above situation, the terminal creates a list to record the application interfaces displayed on the second screen during a certain period of time. In some embodiments, in a case where the second screen displays the second application interface, the terminal may fill the relevant data of the second application interface into the head of the list. In this case, after the screen switching control is triggered, the terminal may display the first application interface on the second screen. At the same time, the terminal may fill the relevant data of the second application interface into the head of the list, and accordingly, the relevant data of the second application interface may move one position in sequence. Similarly, in a case where the terminal stops displaying a certain application interface on the second screen, the terminal may delete the data corresponding to the application interface from the list. In some embodiments, after the terminal covers the second application interface with the first application interface, the terminal receives the application opening operation performed on the application corresponding to the second application interface on the first screen. In this case, the terminal displays the second application interface on the first screen and deletes the second application interface from the list.

In a case where the terminal receives a third gesture operation performed on the first application interface on the second screen, the first application interface may be switched to the second application interface. After the terminal covers the second application interface with the first application interface, both the relevant data of the first application interface and the relevant data of the second application interface may simultaneously exist in the list. In this case, in a case where the terminal receives the third gesture operation performed on the first application interface on the second screen, the first application interface may be switched to the second application interface. In a case where the list simultaneously contains relevant data of multiple application interfaces, and the terminal receives multiple third gesture operations performed on the application interfaces displayed on the second screen, the application interfaces recorded in the list may be sequentially switched each time the third gesture operation is received.

In some embodiments, in a case where the terminal receives the application opening operation performed on the application interface in the list or the second gesture operation performed on the application interface on the second screen, it may stop displaying the corresponding application interface on the second screen and delete the relevant data of the corresponding application interface from the list. After receiving the third gesture operation, the terminal may also not display the application interfaces corresponding to these deleted data.

The embodiments of the present disclosure may be used for the foldable screen terminal, the first screen is an inward-foldable screen, and the second screen is an outer screen of an electronic device. In a case where the first screen is in the folded state, the first screen is not exposed and the second screen is exposed. This foldable screen terminal is only an illustrative example and does not limit the application scope of the embodiments of the present disclosure.

In some embodiments, an area of the second screen is less than that of the first screen.

Since the second screen is the outer screen of the electronic device, its main function is to display the application interface. In a case where both the first application and the second application are included in the list and the first screen is in the non-folded state, the first application interface may be displayed on the second screen, and the second application interface may be displayed on the first screen. However, in a case where the terminal receives the third gesture operation performed on the first application interface on the second screen, it should switch the first application interface to the second application interface. In general, the intelligent terminal does not support displaying a unified application interface on two screens at the same time. Therefore, the terminal may stop displaying the first application interface on the first screen and display the first application interface on the second screen, causing the user to be unable to use the second application interface normally on the first screen. In a case where the user has the need to use the first application interface on the first screen, it is easy to accidentally touch the interface, resulting in stopping displaying the first application interface on the first screen.

Therefore, in a case where the third gesture operation performed on the first application interface on the second screen is received and the first screen is in the folded state, the first application interface is switched to the second application interface.

In a case where the third gesture operation performed on the first application interface on the second screen is received and the first screen is in the non-folded state, the first application interface remains displayed on the second screen.

The third gesture operation may be sliding, dragging, tapping, knuckle-tapping, etc., which should match the gesture operation preset by the developers during the development process.

As illustrated in FIG. 11, in a case where the first screen is in the folded state, the first application interface 1101 is displayed on the second screen. In a case where the third gesture operation (sliding left from the right side of the first application interface) performed on the first application interface on the second screen is received, the first application interface is switched to the second application interface 1102.

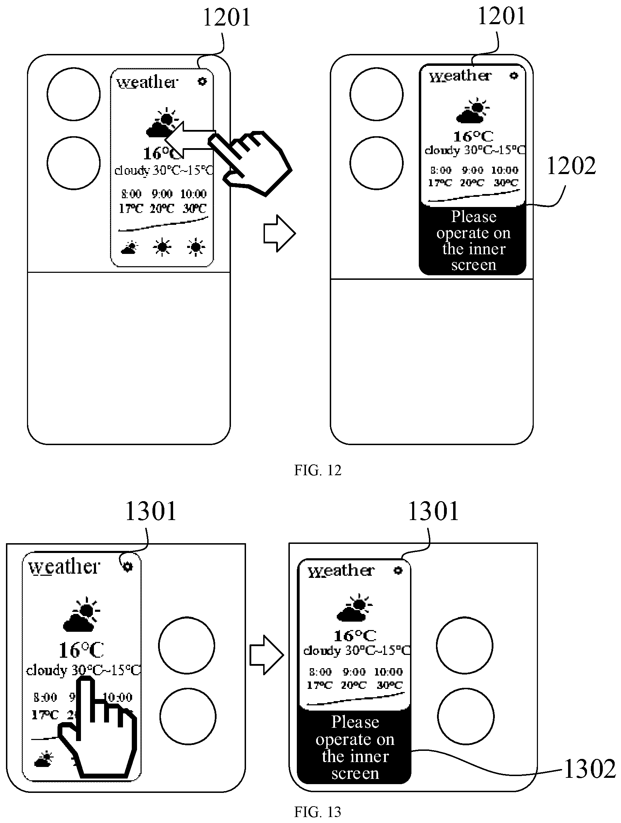

In a case where the first screen is in the non-folded state and the third gesture operation performed on the first application interface on the second screen is received, the second screen may display the first application interface while also providing a non-operable prompt to the user. As illustrated in FIG. 12, in the unfolded state, after receiving the gesture operation to slide left from the right side of the first application interface 1201, the terminal may maintain the display of the first application interface and display a prompt pop-up 1202 on the second screen, prompting the user to perform the operation on the first screen.

In some embodiments, in the folded state, the second screen only supports displaying the application interface and performing simple interface switching operations, and these operations are gesture operations preset by the developers. Therefore, the terminal may also display the prompt pop-up on the second screen in a case where the user's gesture operation performed on the application interface on the second screen that is received by the terminal do not match the preset gesture operation, prompting the user to perform the operation on the first screen. As illustrated in FIG. 13, the preset operation is assumed to be the sliding operation, in the folded state, in a case where the non-preset operation on the first application interface 1301 on the second screen is received, the non-preset operation is assumed to be the long-press operation, the terminal may display the prompt pop-up 1302 on the second screen, prompting the user to perform the operation on the first screen.

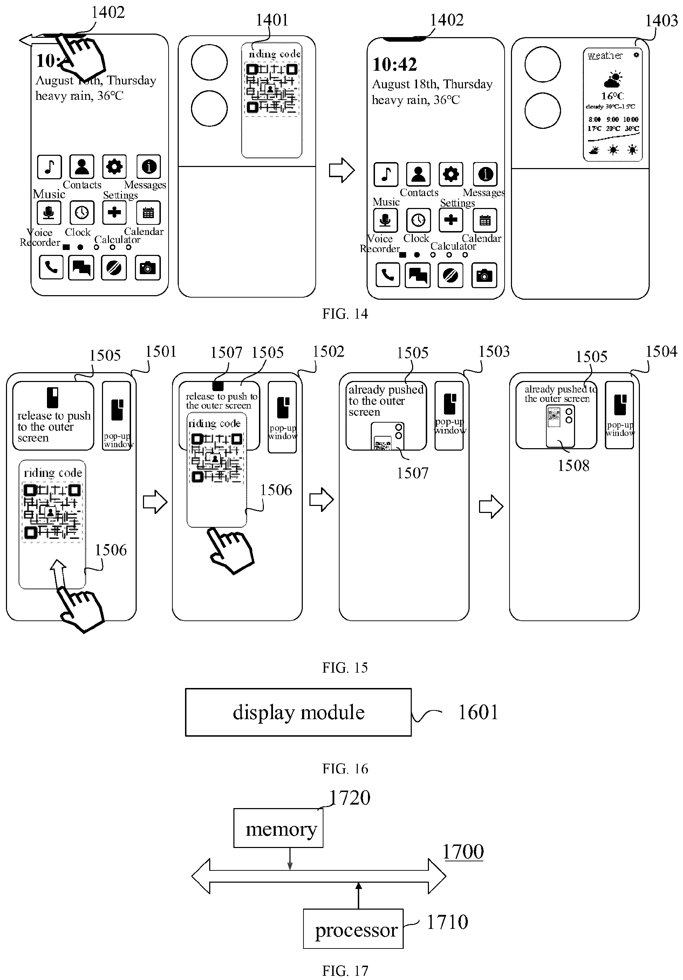

In some embodiments, in a case where the application interface is displayed on the second screen, the interactive control is displayed on the first screen. That is, in a case where the related information of at least one application interface is recorded in the list of the application interfaces displayed on the second screen, the terminal may display the interactive control on the first screen. In some embodiments, in a case where the terminal receives the third triggering operation on the interactive control, the first application interface is switched to the second application interface. In a case where the relevant data of the first application interface and the relevant data of the second application interface simultaneously exist in the list, and the terminal receives the third triggering operation performed on the interactive control on the first screen, the terminal may switch the first application interface displayed on the second screen to the second application interface. The third triggering operation may be the tapping operation, the sliding operation, etc. As illustrated in FIG. 14, the third triggering operation is a leftward sliding operation. The first application interface 1401 is originally displayed on the second screen, and the interactive control 1402 is displayed on the first screen. After receiving the leftward sliding operation on the interactive control, the terminal switches the first application interface 1402 to the second application interface 1403.

In a case where the application interface is displayed on the second screen, the terminal may display the interactive control on the first screen. Therefore, in a case where the third triggering operation performed on the interactive control is received, the interactive control is still displayed on the first screen. In some embodiments, in order to allow the user to intuitively observe the application interface currently displayed on the second screen, the display state of the interactive interface may be related to the primary color tone of the application corresponding to the currently displayed application interface on the second screen. This allows the user to know the application corresponding to the currently displayed application interface on the second screen through the interactive control on the first screen without flipping the terminal. For example, the interactive control corresponding to the X shopping application may be displayed in orange, the interactive control corresponding to the X payment application may be displayed in blue, etc.

In order to the user to more intuitively experience the process of displaying the application interface on the second screen, and to preview the display effect of the second screen on the application interface. After receiving the first gesture operation performed on the first application interface on the first screen, the terminal may display the terminal model on the side where the second screen is located in the screen switching control area to the user, and show the animation of the first application interface moving into the second screen. At the same time, it may also prompt the user with the text that the first application interface has been displayed on the second screen. As illustrated in FIG. 15, in the first display interface 1501, after the terminal receives the first gesture operation (dragging operation) on the first application interface 1506, the screen interactive control 1505 is displayed on the first screen. In the second display interface 1502 of FIG. 15, the first application interface 1506 moves with the first gesture operation and intersects with the screen interactive control 1505. The screen switching control is triggered, and a part of a terminal simulation structure 1507 that is located on a side of the second screen is displayed in the screen switching control. After the screen switching control is triggered, in the third display interface 1503 of FIG. 15, the terminal continuously displays the terminal simulation structure 1507 in the screen switching control, and the process of moving the first application interface into the second screen is displayed through animation. After the terminal displays the first application interface on the second screen, as illustrated in the fourth display interface 1504 of FIG. 15, the area where the screen interactive control 1505 is located displays the complete terminal simulation structure 1508. The terminal simulation structure may also display the display effect of the first application interface on the second screen, allowing the user to observe the effect of the first application interface being displayed on the second screen.

As illustrated in FIG. 16, FIG. 16 shows a structural block view of an application interface display device in some embodiments of the present disclosure. The application interface display device includes a display module 1601.

The display module 1601 is configured for displaying a screen switching control on the first screen in a case where a first gesture operation performed on a first application interface on the first screen is received, and the screen switching control is configured to trigger switching of a screen that displays an application interface.

The display module 1601 is further configured for stopping displaying the first application interface on the first screen and starting displaying the first application interface on the second screen, in a case where the screen switching control is triggered.

In some embodiments, the display module 1601 is configured for:
displaying the screen switching control in a target area of the first screen in a case where a dragging operation performed on the first application interface on the first screen is received and a dragging direction of the dragging operation is a target direction, wherein the target area is an area pointed to by the dragging direction.

In some embodiments, the first application interface shrinks during a dragging operation process, and shrunk first application interface moves with the dragging operation.

The display module 1601 is configured for determining that the screen switching control is triggered, stopping displaying the first application interface on the first screen, and starting displaying the first application interface on the second screen, in a case where the dragging operation is completed and there is an intersection between the first application interface and the screen switching control.

In some embodiments, the first application interface shrinks during a dragging operation process, and shrunk first application interface is fixedly displayed.

The display module 1601 is configured for stopping displaying the first application interface on the first screen and starting displaying the first application interface on the second screen in a case where a triggering operation performed on the screen switching control is received.

In some embodiments, the display module 1601 is further configured for:
displaying an interactive control on the first screen;
stopping displaying the first application interface on the second screen and starting displaying the first application interface on the first screen in a case where a first triggering operation performed on the interactive control is received; and
stopping displaying the interactive control.

In some embodiments, the display module 1601 is configured for:
displaying the interactive control on the first screen based on a screen state of the second screen.

The display state of the interactive control is a first state in a case where the second screen is in a screen-on state, and the display state of the interactive control is a second state in a case where the second screen is in a screen-off state.

In some embodiments, the display module 1601 is further configured for:
switching the display state of the interactive control to the first state in response to a second triggering operation performed on the interactive control, in a case where the display state of the interactive control is the second state; and
switching the second screen to be in the screen-on state.

In some embodiments, the display module 1601 is further configured for:
stopping displaying the first application interface on the second screen and stopping displaying the interactive control on the first screen, in a case where a second gesture operation performed on the first application interface on the second screen is received.

In some embodiments, in a case where the screen switching control is triggered, the display module 1601 is configured for switching the second application interface displayed on the second screen to the first application interface in a case where the screen switching control is triggered and the second application interface is displayed on the second screen.

The display module 1601 is further configured for switching the first application interface to the second application interface in a case where a third gesture operation performed on the first application interface on the second screen is received.

In some embodiments, the first screen is an inward-foldable screen, and the second screen is an outer screen of the electronic device; in a case where the first screen is in a folded state, the first screen is not exposed, and the second screen is exposed.

The display module 1601 is configured for switching the first application interface to the second application interface in a case where the third gesture operation performed on the first application interface on the second screen is received and the first screen is in the folded state.

The display module 1601 is further configured for maintaining display of the first application interface on the second screen in a case where the third gesture operation performed on the first application interface on the second screen is received and the first screen is in a non-folded state.

In some embodiments, an interactive control is displayed on the first screen in the case where the application interface is displayed on the second screen.

After switching the second application interface displayed on the second screen to the first application interface, the display module 1601 is further configured for:
switching the first application interface to the second application interface in a case where the third triggering operation performed on the interactive control is received.

In some embodiments, the display state of the interactive control is related to a primary color tone of an application corresponding to currently displayed application interface on the second screen.

In some embodiments, the display module 1601 is further configured for:
stopping displaying the first application interface on the second screen and starting displaying the first application interface on the first screen, in a case where an application opening operation is received and the application opening operation is configured for indicating opening of an application corresponding to the first application interface.

In summary, in the embodiments of the present disclosure, the terminal has two display screens. After receiving the first gesture operation on the first screen, the terminal may display the screen switching control on the first screen. In a case where the control is triggered, the terminal may stop displaying the first application interface displayed on the first screen and display the first application interface on the second screen. This allows the second screen to display the content of the first application, enabling the user to display the first application interface on the second screen without affecting the normal display of the first screen. In a case where the user needs to externally display the first application interface displayed on the first screen, the user may directly display the first application interface on the second screen. In some embodiments, in a case where the user needs to take a ride, the riding code may be displayed on the second screen. During the scanning process, the riding code may be displayed directly on the second screen without causing any inconvenience to the user's use of the first screen.

As illustrated in FIG. 17, FIG. 17 shows a structural block view of a terminal in some embodiments of the present disclosure. In some embodiments, the terminal 1700 may include one or more processors 1710 and one or more memories 1720.

The processor 1710 may include one or more processing cores. The processor 1710 connects various parts of the entire terminal device through various interfaces and lines. By running or executing instructions, programs, code sets, or instruction sets stored in the memory 1720, and by calling data stored in the memory 1720, the processor 1710 performs various functions of the terminal 1700 and processes data. In some embodiments, the processor 1710 may be implemented in at least one hardware form, such as digital signal processing (DSP), field-programmable gate array (FPGA), or programmable logic array (PLA). The processor 1710 may integrate one or more combinations of a central processing unit (CPU), a graphics processing unit (GPU), a neural-network processing unit (NPU), and a baseband chip. The CPU mainly processes an operating system, a user interface, and an application program. The GPU is configured to be responsible for rendering and drawing the content required to be displayed on the touch screen. The NPU is configured to implement an artificial intelligence (AI) function. The baseband chip is configured to process wireless communication. The above-mentioned baseband chip may not be integrated into the processor 1710 and may be implemented separately through a single chip.

The memory 1720 may include random access memory (RAM) or read-only memory (ROM). In some embodiments, the memory 1720 includes a non-transitory computer-readable storage medium. The memory 1720 may be configured to store instructions, programs, codes, code sets, or instruction sets. The memory 1720 may include a storage program area and a storage data area. The storage program area may store instructions for implementing the operating system, instructions for at least one function (such as touch function, sound playback function, image playback function, etc.), instructions for implementing the various method embodiments described below, etc. The storage data area may store data created based on the use of the terminal 1700 (such as audio data, phone book, etc.).

In addition to the above, those skilled in the art may understand that the structure of the terminal 1700 illustrated in the above figures does not constitute a limitation on the computer device. The computer device may include more or fewer components than the components as illustrated in the figures, or combine certain components, or have a different component layout. In some embodiments, the terminal 1700 also includes components, such as a display screen, a camera assembly, a microphone, a speaker, a radio frequency circuit, an input unit, a sensor (such as an acceleration sensor, an angular velocity sensor, a light sensor, etc.), an audio circuit, wireless fidelity (Wi-Fi), a power supply, a Bluetooth module, etc., which are not be further described here.

The embodiments of the present disclosure further provide a computer-readable storage medium, and the computer-readable storage medium stores at least one program code. The program code is loaded and executed by the processor, so as to implement the application interface display method as described in the above embodiments.

The embodiments of the present disclosure further provide a computer program product. The computer program product includes a computer instruction stored in the computer-readable storage medium. The processor of the computer device reads the computer instruction from the computer-readable storage medium, the processor executes the computer instruction, so that the computer device executes the application interface display method provided in various embodiments described above.

It should be understood that the term "multiple" mentioned in the present disclosure refers to two or more. The term "and/or" describes a relationship between related objects, indicating that there may be three types of relationships. For example, A and/or B, which may represent: the existence of A alone, the existence of A and B at the same time, and the existence of B alone. The character "/" generally indicates that the object before the character *"*/*"* and the object after the character *"*/*"* are in an "or" relationship. In addition, the operation numbers described in the present disclosure only exemplarily illustrates one possible order of execution among the operations. In some embodiments, the above operations may not be executed in the order of numbers, such as two operations with different numbers being executed simultaneously, or two operations with different numbers being executed in an order opposite to that shown in the figures, which may be not limited in the present disclosure.

The above description is only an optional embodiment of the present disclosure and is not intended to limit the present disclosure. Any modification, equivalent replacement, improvement, or the like made within the spirit and principle of the present disclosure should be included in the protection scope of the present disclosure.

## Claims

1. An application interface display method, applied to an electronic device comprising a first screen and a second screen, wherein the first screen and the second screen support independent displaying; and the method comprises:
displaying a screen switching control on the first screen in a case where a first gesture operation performed on a first application interface on the first screen is received, wherein the screen switching control is configured to trigger switching of a screen that displays an application interface; and
stopping displaying the first application interface on the first screen and starting displaying the first application interface on the second screen, in a case where the screen switching control is triggered.

2. The method according to claim 1, wherein the displaying a screen switching control on the first screen in a case where a first gesture operation performed on a first application interface on the first screen is received, comprises:
displaying the screen switching control in a target area of the first screen in a case where a dragging operation performed on the first application interface on the first screen is received and a dragging direction of the dragging operation is a target direction, wherein the target area is an area pointed to by the dragging direction.

3. The method according to claim 2, wherein the first application interface shrinks during a dragging operation process, and shrunk first application interface moves with the dragging operation;
the stopping displaying the first application interface on the first screen and starting displaying the first application interface on the second screen, in a case where the screen switching control is triggered, comprises:
determining that the screen switching control is triggered, stopping displaying the first application interface on the first screen, and starting displaying the first application interface on the second screen, in a case where the dragging operation is completed and there is an intersection between the first application interface and the screen switching control.

4. The method according to claim 2, wherein the first application interface shrinks during a dragging operation process, and shrunk first application interface is fixedly displayed;
the stopping displaying the first application interface on the first screen and starting displaying the first application interface on the second screen, in a case where the screen switching control is triggered, comprises:
stopping displaying the first application interface on the first screen and starting displaying the first application interface on the second screen in a case where a triggering operation performed on the screen switching control is received.

5. The method according to any one of claims 1 to 4, wherein after stopping displaying the first application interface on the first screen, the method further comprises:
displaying an interactive control on the first screen;
stopping displaying the first application interface on the second screen and starting displaying the first application interface on the first screen in a case where a first triggering operation performed on the interactive control is received; and
stopping displaying the interactive control.

6. The method according to claim 5, wherein the displaying an interactive control on the first screen, comprises:
displaying the interactive control on the first screen based on a screen state of the second screen;
wherein the display state of the interactive control is a first state in a case where the second screen is in a screen-on state, and the display state of the interactive control is a second state in a case where the second screen is in a screen-off state.

7. The method according to claim 6, wherein the method further comprises:
switching the display state of the interactive control to the first state in response to a second triggering operation performed on the interactive control, in a case where the display state of the interactive control is the second state; and
switching the second screen to be in the screen-on state.

8. The method according to claim 5, wherein after displaying the interactive control on the first screen, the method further comprises:
stopping displaying the first application interface on the second screen and stopping displaying the interactive control on the first screen, in a case where a second gesture operation performed on the first application interface on the second screen is received.

9. The method according to any one of claims 1 to 4, wherein displaying the first application interface on the second screen in a case where the screen switching control is triggered, comprises:
switching the second application interface displayed on the second screen to the first application interface in a case where the screen switching control is triggered and the second application interface is displayed on the second screen;
the method further comprises:
switching the first application interface to the second application interface in a case where a third gesture operation performed on the first application interface on the second screen is received.

10. The method according to claim 9, wherein the first screen is an inward-foldable screen, and the second screen is an outer screen of the electronic device; in a case where the first screen is in a folded state, the first screen is not exposed and the second screen is exposed;
the switching the first application interface to the second application interface in a case where a third gesture operation performed on the first application interface on the second screen is received, comprises:
switching the first application interface to the second application interface in a case where the third gesture operation performed on the first application interface on the second screen is received and the first screen is in the folded state;
the method further comprises:
maintaining display of the first application interface on the second screen in a case where the third gesture operation performed on the first application interface on the second screen is received and the first screen is in a non-folded state.

11. The method according to claim 9, wherein an interactive control is displayed on the first screen in the case where the application interface is displayed on the second screen;
after switching the second application interface displayed on the second screen to the first application interface, the method further comprises:
switching the first application interface to the second application interface in a case where the third triggering operation performed on the interactive control is received.

12. The method according to claim 11, wherein the display state of the interactive control is related to a primary color tone of an application corresponding to currently displayed application interface on the second screen.

13. The method according to any one of claims 1 to 4, wherein after stopping displaying the first application interface on the first screen and starting displaying the first application interface on the second screen, in a case where the screen switching control is triggered, the method further comprises:
stopping displaying the first application interface on the second screen and starting displaying the first application interface on the first screen, in a case where an application opening operation is received and the application opening operation is configured for indicating opening of an application corresponding to the first application interface.

14. An application interface display device, applied to an electronic device comprising a first screen and a second screen, wherein the first screen and the second screen support independent displaying;
the device comprises:
a display module, configured for displaying a screen switching control on the first screen in a case where a first gesture operation performed on a first application interface on the first screen is received, wherein the screen switching control is configured to trigger switching of a screen that displays an application interface;
the display module is further configured for stopping displaying the first application interface on the first screen and starting displaying the first application interface on the second screen, in a case where the screen switching control is triggered.

15. The device according to claim 14, wherein the display module is configured for:
displaying the screen switching control in a target area of the first screen in a case where a dragging operation performed on the first application interface on the first screen is received and a dragging direction of the dragging operation is a target direction, wherein the target area is an area pointed to by the dragging direction.

16. The device according to claim 15, wherein the first application interface shrinks during a dragging operation process, and shrunk first application interface moves with the dragging operation;
the display module is configured for determining that the screen switching control is triggered, stopping displaying the first application interface on the first screen, and starting displaying the first application interface on the second screen, in a case where the dragging operation is completed and there is an intersection between the first application interface and the screen switching control.

17. The device according to claim 15, wherein the first application interface shrinks during a dragging operation process, and shrunk first application interface is fixedly displayed;
the display module is configured for stopping displaying the first application interface on the first screen and starting displaying the first application interface on the second screen in a case where a triggering operation performed on the screen switching control is received.

18. The device according to any one of claims 14 to 17, wherein the display module is further configured for:
displaying an interactive control on the first screen;
stopping displaying the first application interface on the second screen and starting displaying the first application interface on the first screen in a case where a first triggering operation performed on the interactive control is received; and
stopping displaying the interactive control.

19. The device according to claim 18, wherein the display module is configured for:
displaying the interactive control on the first screen based on a screen state of the second screen;
wherein the display state of the interactive control is a first state in a case where the second screen is in a screen-on state, and the display state of the interactive control is a second state in a case where the second screen is in a screen-off state.

20. The device according to claim 19, wherein the display module is further configured for:
switching the display state of the interactive control to the first state in response to a second triggering operation performed on the interactive control, in a case where the display state of the interactive control is the second state; and
switching the second screen to be in the screen-on state.

21. The device according to claim 18, wherein the display module is further configured for:
stopping displaying the first application interface on the second screen and stopping displaying the interactive control on the first screen, in a case where a second gesture operation performed on the first application interface on the second screen is received.

22. The device according to any one of claims 14 to 17, wherein in a case where the screen switching control is triggered,
the display module is configured for switching the second application interface displayed on the second screen to the first application interface in a case where the screen switching control is triggered and the second application interface is displayed on the second screen; and
the display module is further configured for switching the first application interface to the second application interface in a case where a third gesture operation performed on the first application interface on the second screen is received.

23. The device according to claim 22, wherein the first screen is an inward-foldable screen, and the second screen is an outer screen of the electronic device; in a case where the first screen is in a folded state, the first screen is not exposed and the second screen is exposed;
the display module is configured for switching the first application interface to the second application interface in a case where the third gesture operation performed on the first application interface on the second screen is received and the first screen is in the folded state; and
the display module is further configured for maintaining display of the first application interface on the second screen in a case where the third gesture operation performed on the first application interface on the second screen is received and the first screen is in a non-folded state.

24. The device according to claim 22, wherein an interactive control is displayed on the first screen in the case where the application interface is displayed on the second screen;
after switching the second application interface displayed on the second screen to the first application interface, the display module is further configured for:
switching the first application interface to the second application interface in a case where the third triggering operation performed on the interactive control is received.

25. The device according to claim 24, wherein the display state of the interactive control is related to a primary color tone of an application corresponding to currently displayed application interface on the second screen.

26. The device according to any one of claims 14 to 17, wherein the display module is further configured for:
stopping displaying the first application interface on the second screen and starting displaying the first application interface on the first screen, in a case where an application opening operation is received and the application opening operation is configured for indicating opening of an application corresponding to the first application interface.

27. A terminal, comprising:
a processor; and
a memory; wherein the memory stores at least one program, and the at least one program is configured for being executed by the processor, so as to implement the application interface display method according to any one of claims 1 to 13.

28. A computer-readable storage medium, storing at least one program, wherein the at least one program is loaded and executed by a processor, so as to implement the application interface display method according to any one of claims 1 to 13.

29. A computer program product, comprising:
a computer instruction, stored in a computer-readable storage medium;
wherein a processor of a computer device reads the computer instruction from the computer-readable storage medium, and the processor executes the computer instruction, so as to implement the application interface display method according to any one of claims 1 to 13.
